Europäisches Patentamt

European Patent Office

Office européen des brevets

(19)

(11) Veröffentlichungsnummer: **0 010 512**
**B1**

# (12) EUROPÄISCHE PATENTSCHRIFT

(45) Veröffentlichungstag der Patentschrift:
09.02.83

(21) Anmeldenummer: **79710094.8**

(22) Anmeldetag: **02.10.79**

(51) Int. Cl.³: **C 02 F 1/44,** B 01 D 19/00,
B 01 J 3/02

(54) **Verfahren zur Abführung von Gasen.**

(30) Priorität: **12.10.78 DE 2844407**

(43) Veröffentlichungstag der Anmeldung:
**30.04.80 Patentblatt 80/9**

(45) Bekanntmachung des Hinweises auf die Patenterteilung:
**09.02.83 Patentblatt 83/6**

(84) Benannte Vertragsstaaten:
**BE FR GB IT NL**

(56) Entgegenhaltungen:
**BE-A-691 874**
**DE-A-2 722 975**
**FR-A-1 462 017**
**FR-A-1 521 059**
**GB-A-984 307**
**US-A-3 456 802**
**US-A-3 969 092**

**Die Akte enthält technische Angaben, die nach dem
Eingang der Anmeldung eingereicht wurden und die
nicht in dieser Patentschrift enthalten sind.**

(73) Patentinhaber: **Mannesmann AG, Mannesmannufer 2,
D-4000 Düsseldorf 1 (DE)**

(72) Erfinder: **Drude, Burkhard, Sophienstrasse 85 a,
D-8520 Erlangen (DE)**
Erfinder: **Peters, Thomas, Dipl.-Ing., Jungstrasse 16,
D-8520 Erlangen (DE)**
Erfinder: **Klapp, Prof. Dr., verstorben, D-8520 Erlangen
(DE)**

(74) Vertreter: **Meissner, Peter E.,Dipl.-Ing. et al,
Patentanwälte Dipl.-Ing. Peter E. Meissner Dipl.-Ing.
Hans-Joachim Presting Herbertstrasse 22,
D-1000 Berlin 33 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Abführung von Gasen

Die Erfindung betrifft ein Verfahren zur Abführung von bei submarinen auf dem Prinzip der Umkehrosmose beruhender Meerwasserentsalzung entstehenden Gasen aus dem die Entsalzungseinrichtung sowie die Förderpumpen enthaltenden druckfesten Behälter.

Im Meerwasser gelöste Gase, die sich unter Umständen in dem Druckgefäß einer nach dem Prinzip der umgekehrten Osmose arbeitenden submarinen Entsalzungsanlage ansammeln, können deren Funktion dadurch beeinträchtigen, daß sie den transmembranen Druckunterschied erheblich verringern und bei gewissen unzulässigen Betriebszuständen, z. B. starkem Schwanken des Druckgefäßes, stoßweise zu einer 2-Phasenströmung führen. Sie müssen in größeren oder kleineren Zeitabständen aus dem Druckgefäß entfernt werden. Wegen der Anordnung solcher Anlagen in der Meerestiefe muß dies in möglichst einfacher und zuverlässiger Weise geschehen.

Das einfachste Mittel, eine Erhöhung des Innendruckes des Druckgefäßes durch permeierende Gase zu verhindern, ist eine bis an die Meeresoberfläche reichende Entlüftungsleitung. (»MT« Meerestechnik 7 [1976], Nr. 5, Seiten 145—149).

Ein anderes naheliegendes, wenn auch nicht in diesem Zusammenhang genanntes Verfahren wäre dies, die Gase in einen getrennten Behälter zu überführen, dort maschinell auf den erforderlichen Druck zu bringen und dann in das Meerwasser austreten zu lassen.

Keine dieser Alternativen stellt eine befriedigende Lösung des Problems dar. Eine Entlüftungsleitung ist teuer, da sie in der Meerestiefe dem hohen hydrostatischen Außendruck unterliegt und in der Nähe der Meeresoberfläche den Einwirkungen des Seeganges ausgesetzt ist. Andererseits wäre ein in der Meerestiefe angeordneter Kompressor wegen der großen betriebsmäßig auftretenden Druckunterschiede und der nötigen Energieversorgung kostspielig und schwer zu warten.

Damit ergibt sich die Aufgabe, ein einfaches, billigeres und zuverlässiges Verfahren für die Beseitigung der Gase zu finden.

Die Aufgabe wird erfindungsgemäß dadurch gelöst, daß entstehende Gase in einen zweiten Behälter überführt und aus diesem durch der Produktwasserleitung entnommenes und unter einem den hydrostatischen Druck in seiner Umgebung übertreffenden Druck stehendes Produktwasser in das Meerwasser abgeführt werden.

Gemäß einer Ausgestaltung kann die zur Erhöhung des Drucks der Gase dienende Flüssigkeitsmenge nach Abführung der Gase in das unter hydrostatischem Druck stehende Meerwasser wieder in den geschlossenen Behälter zurückgeleitet werden.

Diese Lösung der Aufgabe zeichnet sich vor allem durch folgende Vorteile aus:

Es ist keine zusätzliche maschinelle Vorrichtung erforderlich;

— daher wird auch keine besondere Energie-Versorgungseinrichtung benötigt;
— ungünstige Bedingungen auf der Saugseite der Pumpe werden vermieden;
— abgesehen von den Absperrorganen erfordert das Verfahren keine Bewegung zusätzlicher Anlageteile;
— bei den im Verhältnis zur Produktwassermenge geringen Gasmengen können gewisse Undichtigkeiten der Absperrorgane zugelassen werden;
— die zyklische Öffnung und Schließung der Absperrorgane kann durch Eingriff von außen oder auch selbsttätig erfolgen;
— die Kosten sind verhältnismäßig niedrig.

Die Erfindung soll an Hand von Ausführungsbeispielen nachfolgend erläutert werden.
Dabei zeigt

Figur 1 eine schematische Darstellung der Anordnung zur Durchführung des erfindungsgemäßen Verfahrens,

Figur 2 eine abgewandelte Ausführung und
Figur 3 ein weiteres Ausführungsbeispiel.

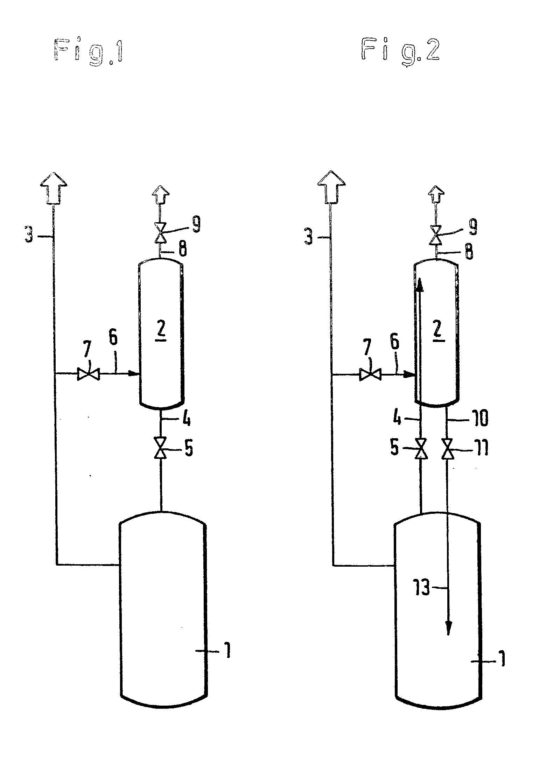

In der Figur 1 bezeichnet 1 das Druckgefäß, in dem sich die Gase ansammeln, und 2 den druckfesten Behälter, der über die Leitung 4 und das Ventil 5 mit 1, über die Leitung 6 und das Ventil 7 mit der Produktwasserleitung 3 und über die Leitung 8 und das Ventil 9 mit dem umgebenden Meerwasser verbunden werden kann. Da die Leitungen 6 und 8 nur in einer Richtung durchströmt werden, können sie zur Verhinderung eines eventuellen Durchsickerns von Meerwasser über 2 in 3 noch zusätzlich mit (hier nicht gezeichneten) Rückschlagventilen versehen sein. Durch entsprechende Maßnahmen wird sichergestellt, daß keines der Ventile unprogrammgemäß geöffnet werden kann.

Funktionsablauf der Vorrichtung ist wie folgt:

1) 5 öffnet: durch 4 tritt eine Gasmenge aus 1 und 2, während gleichzeitig in 2 befindliches Produktwasser aus 2 in 1 fließt. 5 schließt.

2) 7 öffnet: aus 3 tritt das hier unter hohem Druck stehende Produktwasser über 6 in 2 ein und komprimiert die dort eingeschlossene Gasmenge.

3) 9 öffnet: die komprimierte Gasmenge tritt über 8 in das umgebende Meerwasser ein. 7 und 9 schließen gleichzeitig. Diese Schritte wiederholen sich in geeigneten Zeitabständen in zyklischer Reihenfolge.

Dadurch, daß der Leitung 6 und dem Ventil 7 eine wesentlich kleinere lichte Weite gegeben wird als der Leitung 8 und dem Ventil 9, wird erreicht, daß nach Abblasen der Gase aus 2 weiteres Produktwasser aus 3 nur langsam nachströmt, so daß nicht viel Produktwasser verlorengeht.

Um sicherzustellen, daß bei geöffnetem Ventil 5 der Übertritt des Produktwassers aus 2 in 1 und die gleichzeitig gegenläufige Bewegung von Gasen von 1 nach 2 sich nicht gegenseitig behindern, können die Leitungen 4 und das Ventil 5 doppelt vorhanden sein, wobei die für den Gastransport bestimmte Leitung 4 in der Nähe der höchsten Stelle von 1 beginnt und sich in 2 in einem bis dicht an dessen höchste Stelle reichendem Steigrohr fortsetzt, während die für den Wassertransport bestimmte Leitung 10 im Boden von 2 beginnt und sich in 1 in einem Fallrohr 13 fortsetzt, das ein Stück, eventuell bis in die Nähe des Bodens von 1 reicht. Diese Anordnung hat den zusätzlichen Vorteil, daß durch die Höhendifferenz der Wasserspiegel in 2 und 1 die Gase aus 1 in 2 gesaugt werden. Bei dieser in Figur 2 gezeigten Anordnung können die beiden Leitungen 4 und 10 außer mit den gleichzeitig öffnenden und schließenden Ventilen 5 und 11 auch mit (hier nicht gezeichneten) Rückschlagventilen versehen sein.

Bei wieder einer anderen, auf demselben erfindungsgemäßen Verfahren zur Ausstoßung von Gasen beruhenden Anordnung erfolgt die zyklische Öffnung und Schließung der Leitungen 4, 6 und 8 selbsttätig durch den sich in 1 aufbauenden Gasdruck und die Funktion der durch die Anordnung bedingten periodischen Änderungen der an den Enden jeder der Leitungen 4, 6 und 8 auftretenden Druckunterschiede. Bei dieser Anordnung treten an die Stelle der in Figur 2 gezeigten Ventile 5, 7 und 9 Rückschlagventile, die nur bei gewissen Überdrücken öffnen und mittels geeigneter Maßnahmen so miteiannder verriegelt sind, daß sie nicht unprogrammäßig öffnen können.

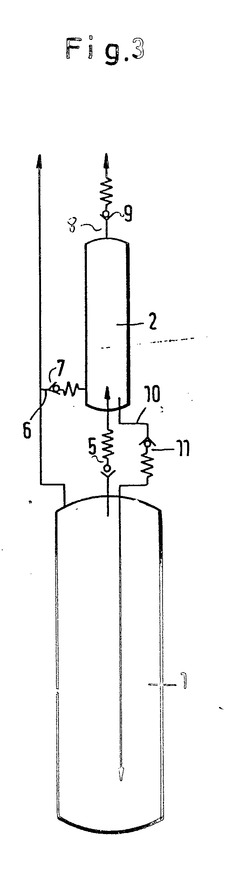

Die Funktion einer solchen Anordnung sei an Hand der Figur 3 erklärt, wobei der Umgebungsdruck mit $P_0$, die im Druckgefäß 1 bzw. dem Behälter 2 herrschenden Drücke mit $p_1$ und $p_2$ und der Druck in der Produktwasserleitung mit $p_3$ bezeichnet sind. Wie bei den vorhergehend beschriebenen Ausführungsbeispielen ist die lichte Weite der Leitung 6 erheblich geringer als die der Leitung 8. Die mit einem Rückschlagventil 11 versehene Sickerleitung 10, über die 1 und 2 miteinander verbunden sind, hat einen so hohen Strömungswiderstand, daß auch bei großer Druckdifferenz nur minimale Wassermengen hindurchtreten können.

In einem Zeitpunkt $t_0$ seien alle Ventile geschlossen und $p_1 = p_2$. Sobald sich in 1 ein Druck $p_1 > p_2$ aufgebaut hat, öffnet 5, so daß Gas aus 1 in 2 übertritt, während gleichzeitig Produktwasser aus 2 in 1 strömt. Wenn $p_2 = p_1$ geworden ist, schließt 5 selbsttätig und gibt das Ventil 7 frei, das seinerseits öffnet, da $p_3 \gg p_2$ ist. Sobald $p_2 > p_0$ geworden ist, öffnet Ventil 9 und schließt wieder zugleich mit Ventil 7, wenn $p_2 = p_0$ wird. Nun sickert etwas Produktwasser durch 10 und 11 aus 2 nach 1, bis $p_2 = p_1$ geworden ist. Damit ist der Ausgangszustand wieder hergestellt.

Die Dauer einer Periode ergibt sich einerseits aus dem Zeitraum, in dem sich ein genügender Überdruck von $p_1 > p_2$ aufbaut, andererseits aus der für das Aussickern einer geringen Produktwassermenge aus 2 nach 1 bis zum Gleichgewicht $p_2 = p_1$ benötigten Zeitspanne.

**Patentansprüche**

1. Verfahren zur Abführung von bei submariner auf dem Prinzip der Umkehrosmose beruhende Meerwasserentsalzung entstehenden Gasen aus dem die Entsalzungseinrichtung sowie die Förderpumpen enthaltenden druckfesten Behälter, dadurch gekennzeichnet, daß die entstehenden Gase in einen zweiten Behälter überführt und aus diesem durch der Produktwasserleitung entnommenes und unter einem den hydrostatischen Druck in seiner Umgebung übertreffenden druck stehendes Produktwasser in das Meerwasser abgeführt werden.

2. Verfahren nach Anspruch 1, dadurch gekennzeichnet, daß die zur Erhöhung des Drucks der Gase dienende Flüssigkeitsmenge nach Abführung der Gase in das unter hydrostatischem Druck stehende Meerwasser wieder in den geschlossenen Behälter zurückgeleitet wird.

**Claims**

1. Method for the removal of gases, occurring in submarine seawater desalinization based on the principle of reverse osmosis, from the pressure-resistant vessel containing the desalinization equipment and the conveyor pumps, characterized in that the gases occurring are transferred into a second vessel and are removed from this into the seawater through product water removed from the product water system and which is at a pressure exceeding the hydrostatic pressure in its vicinity.

2. Method according to Claim 1, characterized in that after removal of the gases into the seawater which is under hydrostatic pressure, the quantity of fluid serving to increase the pressure of the gases is redirected back into the sealed vessel.

**Revendications**

1. Procédé pour évacuer des gaz qui, lors du dessalement sous-marin de l'eau de mer reposant sur le principe de l'osmose inverse, se dégagent du récipient résistant à la pression qui contient le dispositif de dessalement ainsi que les pompes de refoulement, caractérisé en ce que les gaz dégagés sont transférés dans un deuxième récipient et, évacués de celui-ci dans l'eau de mer par l'eau produite prélevée sur la conduite d'eau produite et qui est sous une pression qui surmonte la pression hydrostatique régnant dans son environnement.

2. Procédé suivant la revendication 1, caractérisé en ce que la quantité de liquide servant pour élever la pression des gaz est renvoyée dans le récipient fermé après l'évacuation des gaz dans l'eau de mer soumise à une pression hydrostatique.

Fig.1

Fig.2

# Fig.3